# DEMANDE DE BREVET EUROPEEN

(11) **EP 1 956 694 A1**
(43) Date de publication de la demande: **13.08.2008**
(21) Numéro de dépôt: 08290120.8
(22) Date de dépôt: 08.02.2008
(51) Int. Cl.: H02G 13/00

(54) **Identification des points vulnerables au foundroiement sur un edifice**

(30) Priorité: 09.02.2007 FR 0700941
(71) Demandeur: ABB France, 92566 Rueil-Malmaison Cedex (FR)
(72) Inventeur: Berger, Gérard Maurice, 91120 Palaiseau (FR); Aït-Amar, Sonia, 91400 Orsay (FR); Serrie, Gérard, 65350 Lansac (FR)
(74) Mandataire: Hirsch & Associés

(57) **Abrégé**

L'invention concerne un procédé d'identification de zones de vulnérabilité (3) d'un édifice (1) vis-à-vis des impacts de foudre directs, en vue notamment de l'implantation sur ledit édifice (1) d'un ou de plusieurs paratonnerres destinés à la protection dudit édifice (1), ledit procédé étant caractérisé en ce qu'il comporte :
- une étape (a) de modélisation de l'édifice (1) au cours de laquelle on établit un modèle géométrique (2) de la structure dudit édifice,
- une étape (b) de simulation au cours de laquelle on simule l'application d'un champ électrique atmosphérique prédéterminé audit modèle géométrique (2) et l'on évalue les valeurs de champ électrique résultant et/ou de potentiel résultant en une pluralité de zones situées à la surface et/ou au voisinage immédiat dudit modèle géométrique.

Procédés d'identification des zones vulnérables au foudroiement sur un édifice.

## Description

La présente invention se rapporte au domaine technique général des méthodes d'étude visant à déterminer l'implantation et le dimensionnement de dispositifs de capture de foudre, tel que des paratonnerres, destinés à protéger un édifice contre les effets du foudroiement.

La présente invention concerne plus particulièrement un procédé d'identification de zones de vulnérabilité d'un édifice vis-à-vis des impacts de foudre directs, en vue notamment de l'implantation sur ledit édifice d'un ou de plusieurs paratonnerres destinés à la protection dudit édifice contre les impacts de foudre directs.

La présente invention concerne également un procédé d'installation de moyens de protection d'un édifice contre les impacts de foudre directs.

La présente invention concerne également un programme informatique comprenant un moyen de code de programme informatique adapté pour exécuter les étapes d'un procédé d'identification de zones de vulnérabilité d'un édifice lorsque ledit programme est exécuté sur un ordinateur.

L'invention concerne en outre la mise en oeuvre d'un programme informatique précité sur un support lisible par un ordinateur, ainsi qu'un support pouvant être lu par un ordinateur et sur lequel est enregistré un tel programme informatique.

Afin de protéger un édifice contre un impact direct de foudre, il est connu de le doter d'un dispositif de protection, usuellement désigné par le terme *« paratonnerre* », qui comporte généralement les trois éléments principaux suivants : un moyen de capture, un conducteur de descente et une prise de terre.

Le moyen de capture est formé d'un ou plusieurs éléments électriquement conducteurs placés au contact de l'atmosphère, et le type de paratonnerre est généralement défini selon la nature dudit moyen de capture : pointe simple, pointe à dispositif d'amorçage, cage maillée, fil tendu, etc.

Ledit moyen de capture est relié à la terre par l'intermédiaire du conducteur de descente de telle sorte qu'une décharge atmosphérique (éclair) qui s'abat sur ledit moyen de capture est acheminée, sous forme d'un courant électrique dit *« courant de foudre* », vers la prise de terre qui dissipe ledit courant de foudre dans le sol.

Un tel dispositif de protection a donc pour rôle d'intercepter les décharges de foudre qui apparaissent à l'intérieur d'un certain périmètre autour dudit dispositif, afin d'éviter que lesdites décharges n'occasionnent des dommages préjudiciables aux activités humaines, tel que des dégradations d'équipements ou d'installations, des perturbations voire des interruptions des télécommunications, ou encore des ruptures d'approvisionnement énergétique.

Bien entendu, l'installation d'un tel dispositif de protection requiert que les moyens de capture de foudre soient agencés et dimensionnés de manière appropriée, afin que la foudre s'abatte préférentiellement sur lesdits moyens de capture plutôt que sur une autre partie de l'édifice à protéger.

Pour dimensionner un tel dispositif de protection contre les effets directs de la foudre, il est donc connu de procéder à une analyse du risque selon la norme NFC-17100-2. Cette norme permet de déterminer le niveau de protection (de 1 à 4) à adopter dans une situation donnée pour réduire les risques à un niveau acceptable.

Ensuite, l'homme de l'art trace un plan de l'édifice et dispose sur ce plan des paratonnerres, au jugé, selon un agencement dicté par son expérience.

Puis, il utilise le modèle électrogéométrique (MEG) afin de déterminer la zone de protection conférée par lesdits paratonnerres.

Si le résultat fourni par ledit modèle électrogéométrique lui semble convenir, il réalise l'installation effective conformément à l'agencement retenu.

S'il constate au contraire que le résultat obtenu n'est pas satisfaisant, c'est-à-dire qu'une partie de l'édifice à protéger se situe en dehors de la zone de protection définie par l'agencement des paratonnerres initialement proposé, l'homme de l'art recherche sur le plan un nouvel agencement plus approprié, par exemple en déplaçant les paratonnerres, en modifiant leur nombre, leur répartition et/ou leurs dimensions, puis il recommence son analyse en appliquant le modèle électrogéométrique au nouvel agencement.

Ce processus empirique se répète ainsi jusqu'à l'obtention d'un résultat satisfaisant, c'est-à-dire d'un agencement qui confère une zone de protection qui couvre tout l'édifice.

Si une telle méthode permet généralement de parvenir à des résultats globalement satisfaisants en matière de protection, sa mise en application présente toutefois certains inconvénients.

En premier lieu, elle requiert l'intervention d'un homme de l'art expérimenté capable de pressentir l'agencement, et notamment la position des paratonnerres en fonction de la configuration du bâtiment à équiper.

En outre, dans le cas où l'édifice présente une forme complexe, il est fréquemment nécessaire de réaliser plusieurs tentatives d'agencement avant de trouver une solution satisfaisante.

La mise en oeuvre d'une telle méthode empirique et itérative est donc souvent génératrice d'un certain gaspillage de temps, et par conséquent à l'origine d'un surcoût d'installation des paratonnerres.

En outre, le modèle électrogéométrique ne tient pas compte de la présence du traceur ascendant. Il ne prend donc pas en considération la géométrie de l'édifice aux limites des zones de protection.

Or, en pratique, on observe parfois le foudroiement de structures supposées protégées, au niveau de coins ou d'arêtes pourtant inclus dans la zone de protection déterminée à partir du modèle électrogéométrique.

Les objets assignés à l'invention visent en conséquence à porter remède aux différents inconvénients susmentionnés et à proposer un nouveau procédé d'identification de zones de vulnérabilité d'un l'édifice vis-à-vis des impacts directs de foudre qui permette notamment un positionnement déterministe et fiable de moyens de capture de foudre sur ledit édifice.

Un autre objet assigné à l'invention vise à proposer un nouveau procédé d'identification de zones de vulnérabilité qui soit particulièrement simple et rapide à mettre en oeuvre.

Un autre objet assigné à la présente invention vise à proposer un nouveau procédé d'identification de zones vulnérables au foudroiement dont l'utilisation soit particulièrement intuitive et dispense l'utilisateur du recours à un expert.

Un autre objet assigné à l'invention vise à proposer un nouveau procédé d'identification de zones de vulnérabilité qui se prête particulièrement bien à une mise en oeuvre automatisée par ordinateur.

Un autre objet assigné à la présente invention vise à proposer un nouveau procédé d'installation de moyens de protection d'un édifice contre les impacts de foudre directs qui soit particulièrement rapide, efficace et fiable.

Les objets assignés à l'invention sont atteints à l'aide d'un procédé d'identification de zones de vulnérabilité d'un édifice vis-à-vis des impacts de foudre directs, en vue notamment de l'implantation sur ledit édifice d'un ou de plusieurs paratonnerres destinés à la protection dudit édifice contre les impacts de foudre directs, ledit procédé étant caractérisé en ce qu'il comporte :
- une étape (a) de modélisation de l'édifice au cours de laquelle on établit un modèle géométrique de la structure dudit édifice,
- une étape (b) de simulation au cours de laquelle on simule l'application d'un champ électrique atmosphérique prédéterminé audit modèle géométrique et l'on évalue les valeurs de champ électrique résultant et/ou de potentiel résultant en une pluralité de zones situées à la surface et/ou au voisinage immédiat dudit modèle géométrique, de manière à obtenir un spectre de répartition spatiale dudit champ électrique résultant et/ou dudit potentiel résultant.

Les objets assignés à l'invention sont également atteints à l'aide d'un procédé d'installation de moyens de protection d'un édifice contre les impacts directs de foudre, caractérisé en ce qu'il comporte une étape (E1) d'identification des zones vulnérables au foudroiement dudit édifice, au cours de laquelle on applique audit édifice un procédé d'identification de zones de vulnérabilité conforme à l'invention, puis une étape (E2) de montage au cours de laquelle on installe matériellement sur ledit édifice un ou plusieurs moyens de capture de foudre dans la ou les zones dudit édifice identifiée(s) comme zone(s) vulnérable(s) au foudroiement.

Les objets assignés à l'invention sont enfin atteints à l'aide d'un programme informatique qui comprend un moyen de code de programme informatique adapté pour exécuter les étapes d'un procédé d'identification de zones de vulnérabilité d'un édifice conforme à l'invention lorsque ledit programme est exécuté sur un ordinateur.

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 représente, selon une vue schématique en perspective, la modélisation d'un édifice et les conditions dans lesquelles on réalise l'étape (b) de simulation au cours d'un procédé d'identification de zones de vulnérabilité conforme à l'invention.
- La figure 2 illustre, selon une vue schématique, une forme particulière de présentation des résultats d'une étape (b) de simulation réalisée au cours d'un procédé d'identification conforme à l'invention.

L'invention concerne un procédé d'identification de zones de vulnérabilité 3 d'un édifice 1 vis-à-vis des impacts de foudre directs.

Par « *édifice »* 1, on désigne indifféremment tous types de bâtiments, à usage industriel, commercial ou d'habitation, de monuments, d'ouvrages d'art du génie-civil ou militaire, ou encore d'infrastructures de transport de personnes, de biens, d'informations, et d'énergie.

Le procédé d'identification conforme à l'invention est tout particulièrement destiné à être appliqué à la détection de zones de vulnérabilité 3 sur des édifices artificiels construits par l'homme, mais peut parfaitement être mis en oeuvre sur des structures naturelles, que celles-ci soient ou non exploitées par l'homme (forêts, reliefs montagneux, terres agricoles, carrières, etc.)

Au sens de l'invention, une « *zone de vulnérabilité »* désigne une partie de l'édifice qui se trouve particulièrement exposée au foudroiement, notamment en raison de sa position dans l'espace, de sa nature, ou de sa conformation.

Plus précisément, la zone de vulnérabilité (ci après désignée également comme *« zone vulnérable au foudroiement»,* ou, en abrégé, « *zone vulnérable »)* constituera un point de foudroiement privilégié qui sera plus susceptible de subir un impact de foudre que les autres régions de l'édifice qui l'entourent.

En d'autres termes, en cas d'apparition de conditions atmosphériques orageuses au voisinage de l'édifice, ce sont la ou les zones de vulnérabilité qui présenteront la plus forte probabilité d'émettre un traceur ascendant susceptible d'opérer une jonction avec un traceur descendant issu d'un nuage chargé, tandis que le reste de l'édifice présentera une probabilité bien plus faible d'amorçage d'un tel traceur ascendant.

De façon particulièrement préférentielle, le procédé d'identification conforme à l'invention est mis en oeuvre en vue de l'implantation sur l'édifice d'un ou de plusieurs paratonnerres.

Au sens de l'invention, un paratonnerre désigne tout moyen de protection de l'édifice contre les impacts de foudre directs.

Plus précisément, un tel paratonnerre dispose de moyens de capture comprenant un ou plusieurs éléments électriquement conducteurs placés au contact de l'atmosphère, lesdits moyens de capture étant reliés à la terre par l'intermédiaire d'un conducteur de descente, de telle sorte qu'une décharge atmosphérique (éclair) qui s'abat sur lesdits moyens de capture est acheminée, sous forme d'un courant électrique dit *« courant de foudre* », vers le sol dans lequel son énergie se dissipe.

Le paratonnerre conforme à l'invention peut notamment comporter une pointe simple, une pointe à dispositif d'amorçage, une cage maillée, un fil tendu, etc.

Bien entendu, on comprendra aisément que l'implantation desdits moyens de capture se fera préférentiellement au niveau des zones de vulnérabilité identifiées sur l'édifice, de telle sorte qu'il n'y ait pas de *« concurrence* à *l'amorçage »* possible entre lesdits moyens de capture de foudre et des zones de vulnérabilité non équipées de tels moyens.

Selon une caractéristique importante de l'invention, le procédé d'identification comporte une étape (a) de modélisation de l'édifice 1 au cours de laquelle on établit un modèle géométrique 2 de la structure dudit édifice 1.

Par *« modèle géométrique* », on désigne une représentation dans l'espace qui reproduit la forme et les proportions de l'édifice 1 réel, les dimensions dudit édifice étant éventuellement ajustées par un facteur d'échelle prédéfini.

Selon l'invention, le modèle géométrique 2 doit notamment présenter des contours externes qui reproduisent de manière relativement fidèle, précise et détaillée ceux de l'édifice 1 réel. L'homme du métier sera naturellement en mesure d'apprécier le degré de précision et de fidélité de la reproduction, c'est-à-dire le niveau de détail du modèle géométrique 2, notamment en fonction des indications fournies ci-après.

Par ailleurs, bien que la représentation dudit modèle géométrique 2 puisse être réalisée dans un espace bidimensionnel, elle est de préférence tridimensionnelle. En particulier, le modèle géométrique peut notamment se présenter sous la forme d'un bloc solide plein (représentation *« volumique »),* ou encore d'une enveloppe de type coque reproduisant sensiblement la forme extérieure de l'édifice considéré (représentation *« surfacique* »).

Il est remarquable que la modélisation, et plus généralement le procédé d'identification de zones de vulnérabilité, sont applicables à un *« édifice »* qui peut consister aussi bien en une portion restreinte d'un bâtiment, en un bâtiment dans son ensemble, ou en un groupe de bâtiments.

En outre, il est parfaitement et avantageusement possible d'appliquer ledit procédé d'identification à un ensemble comprenant non seulement un édifice 1, mais également un ou plusieurs éléments de l'environnement dans lequel s'intègre ledit édifice 1. En particulier, il est envisageable d'intégrer au modèle géométrique 2 des éléments environnementaux à caractère provisoire (grues de chantiers, arbres, ...) ou durable (reliefs, montagnes, building, ...) afin de tenir compte de l'influence de l'environnement sur la localisation de zones de vulnérabilité de l'édifice 1.

Selon une caractéristique importante de l'invention, le procédé d'identification comporte également une étape (b) de simulation au cours de laquelle on simule l'application d'un champ électrique atmosphérique prédéterminé audit modèle géométrique 2, et l'on évalue les valeurs de champ électrique résultant et/ou de potentiel résultant en une pluralité de zones situées à la surface et/ou au voisinage immédiat dudit modèle géométrique 2, de manière à obtenir un spectre de répartition spatiale dudit champ électrique résultant et/ou dudit potentiel résultant.

Au sens de l'invention, le *« spectre de répartition spatiale du champ électrique résultant »,* respectivement le *« spectre de répartition spatiale du potentiel résultant »,* constitue un ensemble de valeurs évaluées, de préférence calculées, de l'intensité dudit champ électrique résultant, respectivement de potentiel correspondant audit champ électrique résultant, chaque valeur d'intensité, respectivement de potentiel, étant assortie d'une information spatiale permettant de localiser dans l'espace, et plus particulièrement sur le modèle géométrique 2, la zone, c'est-à-dire la région formée par un élément de surface ou de volume, dans laquelle l'intensité du champ électrique résultant, respectivement le potentiel résultant, est égal(e) à ladite valeur calculée.

L'objet de la simulation conforme à l'invention consiste donc à recréer virtuellement le comportement de l'édifice 1 lorsque celui-ci est placé dans des conditions atmosphériques particulières, et notamment dans des conditions atmosphériques orageuses, de manière à pouvoir observer son influence, et plus précisément les effets de distorsion et de concentration du champ électrique atmosphérique provoqués par la présence dudit édifice.

En effet l'édifice 1 constitue un élément perturbateur du champ électrique atmosphérique, qui réagit selon sa configuration (forme, dimensions, proportions, matériaux constitutifs...) lorsqu'il est soumis audit champ électrique atmosphérique pour créer, dans son voisinage et/ou à sa surface même, un champ électrique de forme et d'intensité particulières, qualifié ici de *« champ électrique résultant »* (en ce sens qu'il résulte de la déformation des lignes de champ électrique atmosphérique causée par la présence de l'édifice).

Or, plus une zone de l'édifice 1 a tendance à provoquer l'apparition d'un champ électrique localisé d'intensité élevée, plus la probabilité est grande de voir cette zone foudroyée par temps d'orage. En effet, le seuil d'amorçage d'un traceur ascendant sera plus susceptible d'être franchi dans de telles zones que dans d'autres zones amplifiant ou concentrant moins le champ électrique ambiant.

C'est pourquoi la simulation conforme à l'invention permet avantageusement de prévoir de façon anticipée et déterministe quelles seront les zones de vulnérabilité dudit édifice, pour ensuite doter tout ou partie desdites zones de vulnérabilité de moyens de capture de la foudre.

En d'autres termes, le procédé conforme à l'invention permet avantageusement de s'affranchir de tout processus empirique itératif et approximatif lors de la recherche d'emplacements appropriés pour l'implantation de tels dispositifs de capture de foudre. Il en résulte un gain significatif de temps et par conséquent une réduction des coûts des opérations d'installation.

De préférence, l'étape (b) de simulation comporte une sous-étape (b1) de maillage au cours de laquelle on divise virtuellement la surface du modèle géométrique 2 en une pluralité de zones élémentaires, préférentiellement contiguës, dites *« mailles »,* ainsi qu'une sous-étape (b2) de résolution numérique au cours de laquelle on résout numériquement l'équation de Laplace sur chacune desdites mailles, de manière à obtenir les valeurs de champ et/ou de potentiel correspondantes.

Plus précisément, l'étape (b) de simulation peut avantageusement être conduite selon une méthode de calcul qui va maintenant être brièvement décrite.

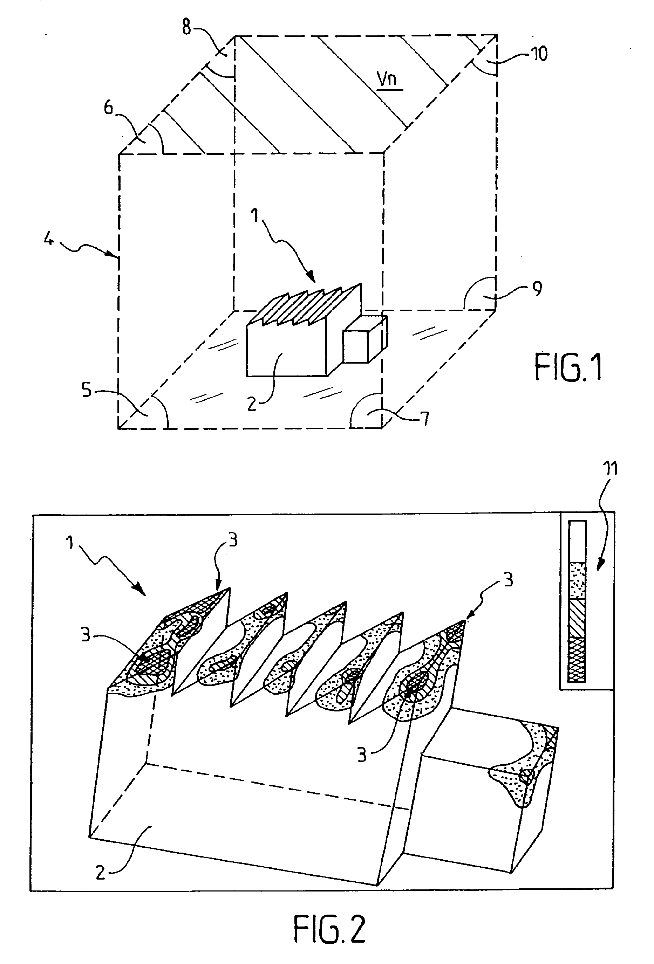

De façon connue, on définit, autour du modèle géométrique 2, un domaine spatial de résolution 4 prédéfini, de préférence constitué par un polyèdre fictif, préférentiellement parallélépipédique, et de façon particulièrement préférentielle cubique, tel que cela est représenté sur la figure 1.

On fixe alors les conditions aux limites du domaine de résolution, en considérant que la face inférieure plane 5 du cube, qui représente le sol à partir duquel s'élève l'édifice 1, se trouve à un potentiel nul, tandis que la face plane supérieure opposée 6, qui représente la base d'un nuage orageux, présente un potentiel Vn.

De façon particulièrement préférentielle, le potentiel Vn est choisi de telle sorte que l'intensité du champ électrique atmosphérique soit de l'ordre de 10 kV/m, c'est-à-dire reproduise des conditions orageuses réalistes conformes à celles observées lors d'évènements orageux réels.

Par ailleurs, on suppose de préférence que les autres faces planes 7, 8, 9, 10 (i.e. les faces latérales du cube dans l'exemple illustré sur la figure 1) sont des surfaces isolées qui ne perturbent pas la répartition des lignes de champ (conditions de Dirichlet).

De façon préférentielle, on effectuera, lors de la sous-étape (b2) de maillage, un maillage adaptatif du domaine de résolution 4, et plus particulièrement de la surface du modèle géométrique 2, en affinant ledit maillage aux endroits où le potentiel comporte de forts gradients (notamment sur les aspérités, coins, arêtes ou parties saillantes du modèle géométrique 2) et en veillant à ce que ledit maillage ne comporte pas de variations brusques. Les mailles ainsi définies constituent donc les zones dans lesquelles vont être évaluées le champ et/ou le potentiel résultants.

On résout ensuite l'équation de Laplace dans le domaine de résolution, de préférence à l'aide du module de résolution algorithmique (solveur) d'un programme de calcul par éléments finis, tels que le programme COMSOL®, en imposant la précision souhaitée, conformément aux connaissances générales de l'homme du métier.

La résolution de l'équation de Laplace permet de calculer les valeurs d'intensité du champ électrique et de potentiel en tout point du maillage, c'est à dire d'obtenir un spectre discret de répartition spatiale de l'intensité du champ électrique résultant et/ou du potentiel résultant.

De préférence, l'étape (b) de simulation comprend également une sous-étape (b3) de représentation graphique au cours de laquelle on superpose à une représentation graphique du modèle géométrique 2 un ou plusieurs éléments représentatifs du spectre de répartition spatiale du champ électrique résultant et/ou du potentiel résultant.

Ainsi, il est possible d'obtenir un rendu visuel global du champ, respectivement du potentiel, résultants, et ainsi de repérer immédiatement et intuitivement les zones de vulnérabilité en recensant les zones dans lesquelles les valeurs calculées sont les plus élevées.

Par « *éléments représentatifs* », on désigne notamment tout type de légende explicite ou symbolique placée en surimpression sur le modèle géométrique 2 et renseignant sur la valeur d'intensité du champ et/ou de potentiel au point considéré. Parmi les éléments représentatifs utilisables, on peut notamment citer les valeurs explicites chiffrées ou imagées de champ ou de potentiel, les tracés de lignes de champ ou encore de courbes équipotentielles.

En particulier, au cours de l'étape (b) de simulation, on pourra notamment établir le tracé d'une pluralité de lignes de champ électrique ou de courbes équipotentielles à la surface et/ou au voisinage immédiat du modèle géométrique 2, que ce soit en trois dimensions ou en projection plane.

Ce tracé pourra résulter par exemple d'un ensemble de coordonnées spatiales discrètes calculées numériquement de manière approchée et correspondant à des points situés sur la ligne de champ ou la courbe équipotentielle considérée, la connaissance desdites coordonnées permettant d'extrapoler le trajet emprunté par ladite courbe par interpolation et lissage.

Ainsi, on pourra observer directement les effets de distorsion et de concentration du champ électrique atmosphérique provoqué par l'édifice 1 et/ou l'environnement dans lequel il est placé.

De façon particulièrement préférentielle, la sous-étape (b3) de représentation graphique comprend une phase (b3') de coloration au cours de laquelle on associe à une ou plusieurs valeurs, ou plages de valeurs, du spectre de répartition spatiale de l'intensité du champ électrique résultant, respectivement du potentiel résultant, une couleur particulière que l'on reporte sur la ou les zones du modèle géométrique 2 dans laquelle, ou lesquelles, l'intensité évaluée du champ électrique résultant, respectivement le potentiel résultant, correspond à ladite valeur, ou plage de valeurs.

En d'autres termes, on traduit de préférence le spectre sous la forme d'une cartographie colorée associée à une échelle de couleurs 11 qui permet de déceler visuellement et immédiatement les zones de vulnérabilité 3 par contraste avec les autres zones moins exposées. Une telle cartographie permet avantageusement de fournir un résultat intuitif dont l'interprétation ne nécessite pas l'intervention d'un expert.

Tel que cela est représenté sur la figure 2, sur laquelle les couleurs ont toutefois étaient remplacées par différents types de hachures en raison d'impératifs inhérents à la reprographie du document, on constate l'efficacité de la méthode qui permet d'isoler les zones de vulnérabilité 3. En l'occurrence, sur cet exemple particulier de modèle géométrique 2 qui symbolise une usine au toit dentelé, le procédé d'identification conforme à l'invention permet de confirmer que les emplacements les plus exposés au foudroiement correspondent aux arêtes et aux coins des dentelures extrêmes (respectivement à gauche et à droite sur la figure 2).

Il est remarquable que sur ladite figure 2, les frontières entre les zones colorées différemment correspondent sensiblement aux courbes équipotentielles et permettent ainsi de juger des gradients de potentiel apparaissant au niveau des singularités géométriques de la structure de l'édifice 1.

De préférence, le procédé d'identification conforme à l'invention comprend une étape (c) d'analyse au cours de laquelle on examine le spectre obtenu lors de l'étape (b) de simulation afin d'identifier, parmi la pluralité de zones considérées à la surface et/ou au voisinage immédiat du modèle géométrique (2), la ou les zones de vulnérabilité au foudroiement 3 comme étant la ou les zones qui présente(nt) des valeurs particulières de champ et/ou de potentiel qui correspondent à des maxima locaux ou globaux.

*A contrario,* il serait bien entendu envisageable d'utiliser le procédé d'identification conforme à l'invention pour repérer un extremum local ou global quelconque du spectre de répartition spatial de l'intensité du champ électrique résultant et/ou du potentiel résultant, et en particulier un minimum, afin d'identifier une ou plusieurs zones de sécurité peu susceptibles d'attirer la foudre.

Plus précisément, l'étape (c) d'analyse peut comporter une sous-étape (c1) de filtrage au cours de laquelle on compare chacune des valeurs de champ, respectivement de potentiel, du spectre à une valeur seuil prédéterminée, et l'on établit une liste des zones pour lesquelles lesdites valeurs de champ, respectivement de potentiel, sont supérieures ou égales à ladite valeur seuil.

De façon particulièrement préférentielle, le champ électrique atmosphérique appliqué au modèle géométrique 2 sera choisi de manière à traduire fidèlement des conditions orageuses réelles, et la valeur seuil utilisée lors de la sous-étape (c1) de filtrage sera choisie comme sensiblement égale au seuil d'amorçage d'un traceur ascendant.

En d'autres termes, on pourra mettre en oeuvre un premier critère dit *« absolu* », qui consiste à appliquer au modèle géométrique 2, lors de l'étape (b) de simulation, un champ électrique atmosphérique qui traduit fidèlement des conditions orageuses réelles, puis à établir le spectre de répartition spatiale du champ électrique résultant et/ou du potentiel résultant, et enfin à rechercher dans ce spectre si une ou plusieurs valeurs calculées dépassent un seuil critique, dit *« seuil d'amorçage »,* prédéterminé. L'application d'un tel critère absolu permet avantageusement de recenser de façon fiable l'ensemble des zones de vulnérabilité à partir desquelles un traceur ascendant est effectivement susceptible de se former lors de l'apparition de conditions orageuses.

Par ailleurs l'étape (c) d'analyse pourra comprendre une sous-étape (c2) de classement au cours de laquelle on compare entre elles les différentes valeurs de champ, respectivement de potentiel, du spectre, et l'on établit un classement des zones correspondantes par ordre de champ, respectivement de potentiel, croissant ou décroissant.

En d'autres termes, on pourra mettre en oeuvre un second critère dit *« relatif »,* qui consiste à appliquer au modèle géométrique 2 un champ électrique atmosphérique quelconque, dont l'intensité est toutefois de préférence supérieure, voire très supérieure, à celle du champ électrique atmosphérique par beau temps mais ne correspond pas nécessairement à l'ordre de grandeur des intensités réellement observées lors des orages, puis à établir le spectre correspondant, puis à comparer entre elles les valeurs calculées de champ et/ou de potentiel de manière à pouvoir classer ces dernières par ordre croissant ou décroissant, et ainsi pouvoir évaluer le degré de vulnérabilité de chaque zone de l'édifice 1 par rapport aux autres. Un tel critère relatif permet notamment de réaliser un classement et une sélection par ordre de *«priorité»* ou de *« vulnérabilité »* de divers emplacements susceptible de recevoir des moyens de capture de foudre, en fonction de leur probabilité respective « *naturelle »* d'amorçage.

Il est remarquable qu'un tel examen du spectre par comparaison entre elles desdites valeurs calculées, notamment lorsqu'il est réalisé visuellement à l'aide de la cartographie colorée décrite précédemment, permet de déterminer, voire d'extrapoler, rapidement et de façon fiable l'emplacement et l'étendue de la ou des zones de vulnérabilité 3.

En outre, on combinera de préférence successivement le critère absolu puis le critère relatif, de manière à pouvoir tout d'abord identifier quelles sont les zones de l'édifice 1 effectivement susceptibles d'être foudroyées, puis de décider de l'affectation d'un moyen de capture de foudre sur la zone qui présente, parmi lesdites zones vulnérables identifiées, le plus haut degré de vulnérabilité, c'est-à-dire celle dont la probabilité de foudroiement dans des conditions équivalentes de champ atmosphérique est la plus élevée. Ainsi, on peut optimiser le coût d'une installation en minimisant le nombre de moyens de capture de foudre mis en oeuvre et en tirant le meilleur parti de chacun desdits moyens installés.

Par ailleurs, une fois les zones vulnérables identifiées, le procédé d'identification conforme à l'invention peut avantageusement comporter une étape (d) de validation d'agencement de paratonnerres, destinée à vérifier la pertinence d'un choix particulier d'implantation d'un ou plusieurs paratonnerres dans ladite ou lesdites zones vulnérables.

Ainsi, ladite étape (d) de validation comprend de préférence une sous-étape (d1) d'implantation virtuelle au cours de laquelle on modifie le modèle géométrique 2 en y ajoutant un ou plusieurs paratonnerres situé(s) dans la ou les zones de vulnérabilité 3 au foudroiement identifiées, de manière à obtenir un modèle géométrique modifié, puis une sous-étape (d2) de seconde simulation au cours de laquelle on établit, selon un déroulement analogue à celui de l'étape (b) de simulation, le spectre de répartition spatial du champ électrique résultant et/ou dudit potentiel résultant lorsque l'on applique au modèle géométrique modifié un champ électrique atmosphérique prédéterminé.

Ensuite, l'étape (d) de validation d'agencement de paratonnerres comprend de préférence une sous-étape (d3) de comparaison au cours de laquelle on compare le spectre de répartition spatiale du champ électrique résultant et/ou du potentiel résultant du modèle géométrique initial avec le spectre du modèle géométrique modifié.

De façon particulièrement préférentielle, au cours de l'étape (d2) de seconde simulation, on simule l'application au modèle géométrique modifié d'un champ atmosphérique prédéterminé identique à celui appliqué au modèle géométrique 2 initial lors de l'étape (b) de simulation.

Ainsi, on peut observer l'effet de l'implantation des paratonnerres par une comparaison objective entre le comportement de l'édifice nu initial et celui de l'édifice équipé de paratonnerres selon l'agencement retenu.

Bien entendu, si l'agencement de paratonnerres n'est pas pleinement satisfaisant, il est possible de réaliser de manière analogue une troisième simulation suivi d'une étape de comparaison du troisième spectre aux deux premiers spectres, et ainsi de suite jusqu'à l'obtention d'un résultat qui satisfasse aussi bien aux exigences en matière d'efficacité de protection contre la foudre qu'aux impératifs technico-économiques liés à l'installation desdits paratonnerres.

Bien entendu, la présente invention n'est pas limitée à un procédé d'identification particulier, l'homme du métier étant à même d'apprécier les divers paramètres inhérents à la mise en oeuvre dudit procédé d'identification, tels que l'étendue de l'aire géographique concernée par l'étude et le choix des éléments environnementaux à prendre en considération, le degré de correspondance entre la représentation du modèle géométrique 2 et l'édifice 1 réel, l'étendue du domaine de résolution, les conditions aux limites, la résolution du maillage, la puissance de calcul disponible pour la résolution, ou encore la précision du résultat souhaitée.

Il est notamment remarquable que, lorsque l'édifice 1 culmine à une altitude élevée par rapport au sol (typiquement supérieure à 60 m), ou se trouve juché sur un relief qui le surélève par rapport au sol, l'algorithme de résolution décrit plus haut sera de préférence répété cinq fois, en appliquant tour à tour le potentiel Vn à la face supérieure puis à chacune des faces latérales, de manière à vérifier la sensibilité dudit édifice 1 au foudroiement latéral.

Par ailleurs, de façon particulièrement préférentielle l'étape (a) de modélisation de l'édifice, l'étape (b) de simulation, l'étape (c) d'analyse, et/ou l'étape (d) de validation d'agencement de paratonnerres et plus généralement l'ensemble du procédé d'identification conforme à l'invention, sont numériques et réalisés par la mise en oeuvre d'un programme informatique.

Ainsi, la présente invention concerne également un programme informatique qui comprend un moyen de code de programme informatique adapté pour exécuter l'une ou l'autre des étapes d'un procédé d'identification des zones de vulnérabilité d'un édifice 1 conforme à l'une ou l'autre des variantes décrites lorsque ledit programme est exécuté sur un ordinateur.

Bien entendu, l'invention s'étend également à la mise en oeuvre d'un tel programme informatique sur un support lisible par un ordinateur ainsi qu'à tout support pouvant être lu par un ordinateur et sur lequel est enregistré un programme informatique tel que décrit.

Un tel programme informatique pourra notamment comporter plusieurs modules spécifiques compatibles entre eux, certains modules pouvant constituer des options susceptibles d'être greffées sur un même programme de base commun pour en accroître les capacités ou le confort d'utilisation.

Ainsi, on pourra prévoir un module de modélisation, tel qu'un logiciel de DAO, permettant à l'utilisateur de saisir le modèle géométrique 2.

A ce titre, le programme informatique conforme à l'invention pourra avantageusement comprendre un module de lissage destiné à remplacer, sur un modèle géométrique 2 brut initialement renseigné par l'utilisateur, les arêtes vives par des congés de raccordement de préférence cylindriques et les points anguleux (coins) par des portions de préférences sphériques, de rayon de courbure faible éventuellement paramétrable par l'utilisateur. Ainsi, le champ électrique pourra avantageusement y être déterminé par calcul sans que l'algorithme de résolution se heurte à des problèmes de divergence.

Par ailleurs, le programme informatique conforme à l'invention peut avantageusement comprendre un module de conversion destiné à traduire automatiquement des données issues de fichiers de formats très divers afin de restituer un modèle géométrique 2 fidèle à l'édifice.

En particulier, on peut envisager qu'un tel module comprenne les filtres nécessaires à la conversion automatique de fichiers de plans issus de logiciels de conception assistée par ordinateur, en deux dimensions ou trois dimensions, voire qu'il intègre un système de reconnaissance de formes apte à numériser des plans disponibles sur papier ou encore des clichés de l'édifice 1 et à restituer un tracé dudit édifice (à un facteur d'échelle près).

De préférence, on adjoindra au programme conforme à l'invention un module de résolution par éléments finis permettant à l'utilisateur de définir un maillage du modèle géométrique puis d'y résoudre l'équation de Laplace.

De plus, le programme conforme à l'invention comprendra préférentiellement un module d'affichage apte à créer, voire à animer, une représentation graphique dudit modèle géographique affecté des éléments représentatifs du champ et/ou du potentiel.

En outre, on pourra prévoir un module de guidage apte à guider l'utilisateur en proposant automatiquement à ce dernier un agencement particulier de moyens de capture de foudre établi en fonction des valeurs d'intensité de champ électrique ou de potentiel fournies par le spectre.

En complément ou indépendamment de ce module de guidage, on pourra prévoir un module de comparaison conçu pour afficher simultanément et/ou comparer entre elles différentes simulations effectuées sur un même édifice 1, et plus précisément les cartographies ainsi obtenues.

En effet, tel que cela a été décrit plus haut, il est parfaitement possible de réaliser une simulation à partir d'un premier modèle géométrique représentatif de l'édifice 1 nu, c'est à dire dépourvu de moyen de capture de la foudre, afin d'obtenir une première cartographie, puis de réitérer le procédé d'identification conforme à l'invention après avoir apporté des modifications structurelles audit édifice 1, et notamment avoir ajouté des moyens de capture de foudre sur le modèle géométrique 2, de manière à quantifier l'influence desdits moyens de capture et ainsi d'en vérifier, virtuellement, l'efficacité. De façon analogue, on pourra comparer entre eux divers agencements potentiels de paratonnerres sur un même édifice avant d'opter pour l'un ou l'autre en fonction notamment de critères techniques, esthétiques ou économiques de réalisation.

La présente invention concerne également en tant que tel un procédé d'installation de moyens de protection d'un édifice contre les impacts de foudre directs, caractérisé en ce qu'il comporte une étape (E1) d'identification des zones vulnérable au foudroiement 3 dudit édifice 1 au cours de laquelle on applique audit édifice un procédé d'identification de zones de vulnérabilité 3 conforme à l'invention, et plus précisément comprenant la succession des étapes (a) de modélisation, (b) de simulation et (c) d'analyse, puis une étape (E2) de montage au cours de laquelle on installe matériellement sur ledit édifice 1 un ou plusieurs moyens de capteurs de foudre, du genre paratonnerre, dans la ou les zone(s) dudit édifice 1 identifiée(s) comme zone(s) vulnérable(s) au foudroiement.

Ainsi, le procédé d'identification de zones de vulnérabilité conforme à l'invention est de préférence appliqué préventivement sur un édifice 1 nu, c'est à dire dépourvu de moyens de capture de la foudre, par anticipation, avant la mise en chantier effective de l'implantation de tels moyens de capture.

Toutefois, un tel procédé d'identification peut également être mis en oeuvre lors du rattrapage d'une installation existante, ledit procédé d'identification étant appliqué à l'édifice 1 déjà pourvu d'un ou plusieurs moyens de capture de foudre installés de façon empirique, de manière à détecter d'éventuels failles dans la protection existante et à préconiser un nouvel agencement plus sûr, impliquant par exemple le déplacement d'un ou plusieurs paratonnerres issus du parc existant et/ou l'ajout de nouveaux moyens de capture de foudre.

Ainsi, les procédés conformes à l'invention permettent de définir directement et rapidement l'agencement optimal de moyens de capture de foudre sur un édifice à protéger, de justifier la présence et la disposition desdits moyens de capture en apportant une démonstration rigoureuse de la démarche de sélection des emplacements retenus et des effets de la mise en oeuvre desdits moyens, et enfin, de corriger, le cas échéant, un agencement antérieur mal ou incomplètement défini.

Avantageusement, les agencements obtenus présentent en outre un excellent rapport fiabilité/coût d'installation.

Enfin, la mise en oeuvre rapide, intuitive et conviviale du procédé d'identification conforme à l'invention au moyen d'une interface graphique est accessible et intelligible à toute personne concernée par l'installation de paratonnerres, du particulier à l'installateur en passant par le fabricant.

## Revendications

1. - Procédé d'identification de zones de vulnérabilité (3) d'un édifice (1) vis-à-vis des impacts de foudre directs, en vue notamment de l'implantation sur ledit édifice (1) d'un ou de plusieurs paratonnerres destinés à la protection dudit édifice (1) contre les impacts de foudre directs, ledit procédé étant **caractérisé en ce qu'**il comporte :
- une étape (a) de modélisation de l'édifice (1) au cours de laquelle on établit un modèle géométrique (2) de la structure dudit édifice,
- une étape (b) de simulation au cours de laquelle on simule l'application d'un champ électrique atmosphérique prédéterminé audit modèle géométrique (2) et l'on évalue les valeurs de champ électrique résultant et/ou de potentiel résultant en une pluralité de zones situées à la surface et/ou au voisinage immédiat dudit modèle géométrique, de manière à obtenir un spectre de répartition spatiale dudit champ électrique résultant et/ou dudit potentiel résultant.

2. - Procédé d'identification selon la revendication 1 **caractérisé en ce que** l'étape (b) de simulation comporte une sous-étape (b1) de maillage au cours de laquelle on divise virtuellement la surface du modèle géométrique (2) en une pluralité de zones élémentaires, dites *« mailles* », ainsi qu'une sous-étape (b2) de résolution numérique au cours de laquelle on résout numériquement l'équation de Laplace sur chacune desdites mailles, de manière à obtenir les valeurs de champ et/ou de potentiel correspondantes.

3. - Procédé d'identification selon l'une des revendications 1 ou 2 **caractérisé en ce que** l'étape (b) de simulation comprend une sous-étape (b3) de représentation graphique au cours de laquelle on superpose à une représentation graphique du modèle géométrique (2) un ou plusieurs éléments représentatifs du spectre de répartition spatiale du champ électrique résultant et/ou du potentiel résultant.

4. - Procédé d'identification selon la revendication 3 **caractérisé en ce que** la sous-étape (b3) de représentation graphique comprend une phase (b3') de coloration au cours de laquelle on associe à une ou plusieurs valeurs ou plages de valeurs du spectre de répartition spatiale du champ électrique résultant, respectivement du potentiel résultant, une couleur particulière, couleur que l'on reporte sur la ou les zones du modèle géométrique (2) dans laquelle l'intensité du champ électrique résultant, respectivement le potentiel résultant, correspond à ladite valeur ou est comprise dans ladite plage de valeurs.

5. - Procédé d'identification selon l'une des revendications précédentes **caractérisé en ce qu'**il comprend une étape (c) d'analyse au cours de laquelle on examine le spectre obtenu lors de l'étape (b) de simulation afin d'identifier, parmi la pluralité de zones considérées à la surface et/ou au voisinage immédiat du modèle géométrique (2), la ou les zones de vulnérabilité au foudroiement (3) comme étant la ou les zones qui présente(nt) des valeurs particulières de champ et/ou de potentiel qui correspondent à des maxima locaux ou globaux.

6. - Procédé d'identification selon la revendication 5 **caractérisé en ce que** l'étape (c) d'analyse comporte une sous-étape (c1) de filtrage au cours de laquelle on compare chacune des valeurs de champ, respectivement de potentiel, du spectre à une valeur seuil prédéterminée, et l'on établit une liste des zones pour lesquelles lesdites valeurs de champ, respectivement de potentiel, sont supérieures ou égales à ladite valeur seuil.

7. - Procédé d'identification selon la revendication 6 **caractérisé en ce que**, le champ électrique atmosphérique appliqué au modèle géométrique (2) étant choisi de manière à traduire fidèlement des conditions orageuses réelles, la valeur seuil utilisée lors de la sous-étape (c1) de filtrage est choisie comme sensiblement égale au seuil d'amorçage d'un traceur ascendant.

8. - Procédé d'identification selon l'une des revendications 5 à 7 **caractérisé en ce que** l'étape (c) d'analyse comprend une sous-étape (c2) de classement au cours de laquelle on compare entre elles les différentes valeurs de champ, respectivement de potentiel, du spectre, et l'on établit un classement des zones correspondantes par ordre de champ, respectivement de potentiel, croissant ou décroissant.

9. - Procédé d'identification selon l'une des revendications 5 à 8 **caractérisé en ce qu'**il comporte une étape (d) de validation d'agencement de paratonnerres, qui comprend une sous-étape (d1) d'implantation virtuelle au cours de laquelle on modifie le modèle géométrique (2) en y ajoutant un ou plusieurs paratonnerres situé(s) dans la ou les zones de vulnérabilité au foudroiement identifiées, de manière à obtenir un modèle géométrique modifié, puis une sous-étape (d2) de seconde simulation au cours de laquelle on établit, selon un déroulement analogue à celui de l'étape (b) de simulation, le spectre de répartition spatiale du champ électrique résultant et/ou dudit potentiel résultant lorsque l'on applique au modèle géométrique modifié un champ électrique atmosphérique prédéterminé.

10. - Procédé d'identification selon la revendication 9 **caractérisé en ce que** au cours de l'étape (d2) de seconde simulation, on simule l'application au modèle géométrique modifié d'un champ atmosphérique prédéterminé identique à celui appliqué au modèle géométrique (2) initial lors de l'étape (b) de simulation.

11. - Procédé d'identification selon la revendication 9 ou 10 **caractérisé en ce que** l'étape (d) de validation d'agencement de paratonnerres comprend une sous-étape (d3) de comparaison au cours de laquelle on compare le spectre de répartition spatiale du champ électrique résultant et/ou du potentiel résultant du modèle géométrique initial avec le spectre du modèle géométrique modifié.

12. -Procédé d'identification selon l'une des revendications précédentes **caractérisé en ce que** l'étape (a) de modélisation de l'édifice, l'étape (b) de simulation, l'étape (c) d'analyse, et/ou l'étape (d) de validation d'agencement de paratonnerres sont réalisées par la mise en oeuvre d'un programme informatique.

13. -Procédé d'installation de moyens de protection d'un édifice (1) contre les impacts directs de foudre **caractérisé en ce qu'**il comporte une étape (E1) d'identification des zones vulnérables au foudroiement (3) dudit édifice au cours de laquelle on applique audit édifice (1) un procédé d'identification de zones de vulnérabilité conforme à l'une des revendications 5 à 11, puis une étape (E2) de montage au cours de laquelle on installe matériellement sur ledit édifice (1) un ou plusieurs moyens de capture de foudre dans la ou les zones dudit édifice identifiée(s) comme zone(s) vulnérable(s) au foudroiement (3).

14. - Programme informatique comprenant un moyen de code de programme informatique adapté pour exécuter les étapes d'un procédé d'identification des zones de vulnérabilité d'un édifice conforme à l'une des revendications 1 à 12 lorsque ledit programme est exécuté sur un ordinateur.

15. - Mise en oeuvre d'un programme informatique conforme à la revendication 14 sur un support lisible par un ordinateur.

16. -Support pouvant être lu par un ordinateur et sur lequel est enregistré un programme informatique conforme à la revendication 14.
